# EUROPEAN PATENT SPECIFICATION

(11) **EP 4 225 819 B1**
(45) Date of publication and mention of the grant of the patent: **04.12.2024**
(21) Application number: 21789677.8
(22) Date of filing: 07.10.2021
(51) Int. Cl.: C08F 279/04, C08L 25/12, C08L 55/02, C08F 212/08, C08F 236/06, C08F 6/22

(54) **PREPARATION OF DIENE POLYMER LATEX OF HIGH GEL CONTENT AND CONTROLLED CROSS LINKING**
HERSTELLUNG VON DIENPOLYMERLATEX MIT HOHEM GELGEHALT UND KONTROLLIERTER VERNETZUNG
PRÉPARATION DE LATEX DE POLYMÈRE DIÉNIQUE À TENEUR ÉLEVÉE EN GEL ET RÉTICULATION CONTRÔLÉE

(30) Priority: 08.10.2020 EP 20200860
(43) Date of publication of application: 16.08.2023
(73) Proprietor: INEOS Styrolution Group GmbH, 60325 Frankfurt (DE)
(72) Inventor: NIESSNER, Norbert, 67159 Friedelsheim (DE); MICHELS, Gisbert, 51375 Leverkusen (DE); MADHAV, Shridhar, Vadodara, 390002 (IN); GEVARIA, Kirit, Vadodara, 390008 (IN); SINGH, Prabhat, Ahmedabad 382470 (IN)
(74) Representative: Jacobi, Markus Alexander
(86) International application number: PCT/EP2021/077655
(87) International publication number: WO 2022/074101

(56) References cited:
- EP-A1- 3 235 841
- US-A1- 2003 032 741
- US-A1- 2005 032 984

## Description

The invention relates to a process for the preparation of a diene polymer latex having a high gel content and improved swelling index, the use of said diene polymer latex as starting rubber latex for the preparation of ABS graft rubber copolymers, thermoplastic molding compositions comprising said ABS graft rubber copolymers and their use in the automobile and household industry. The diene polymer latex is obtained through controlled crosslinking in a process of high productivity.

ABS (acrylonitrile-butadiene-styrene) molding compositions or molding compositions of the ABS type have for many years been used in large amounts as thermoplastic resins for the production of moldings of all kinds. The spectrum of properties of such resins can be varied within a wide range. Particularly important properties of ABS molding compositions that may be mentioned are mechanical properties such as high impact strength and modulus of elasticity, thermal properties such as a good dimensional stability under heat, and a good processability (MVR), defined combinations of properties generally being of importance depending on the field of use.

For the production of ABS molding compositions according to the emulsion polymerization process coarse-particle rubber latices are necessary, e.g. butadiene rubber latices which can be produced by different methods. The production of coarse-particle polybutadiene latices often needs a long polymerization time because of the kinetic laws for emulsion polymerization, and especially the polybutadiene emulsion polymerization.

In order to improve the productivity or production rate of the diene rubber latex different routes are followed either by increasing gel content, total solid content, and increasing conversion rate or by decreasing cycle time of the reaction.

WO 2012/022710 discloses ABS graft copolymers and thermoplastic molding compositions thereof having a high impact strength and good processability. The ABS graft copolymer is obtained by emulsion polymerization in which process a starting diene rubber latex is subjected to agglomeration to obtain an agglomerated rubber having a particle size Dw of 150 to 2000 nm. The starting rubber latex having a gel content of 30 to 98 wt.-% and an average particle size of 50 to < 85 nm can be prepared by 1^{st} providing all components at the beginning of the polymerization or - advantageously - 1^{st} providing only a part of the monomers and molecular weight regulators up to 35% and to feed the largest part (no explicit example).

The drawback of this process is the small particle size of the starting rubber latex due to which relatively high amounts of agglomeration agent (e.g. acetic anhydride) are required in order to obtain coarse particles.

EP-A 3235841 discloses ABS graft copolymers of core-shell structure wherein the core comprises a diene-based rubber polymer having a gel content of 70 to 84%, a swelling index of 11 to 25% and a particle size D50 of 260 to 500 nm, which rubber polymer is prepared by emulsion polymerization. Said preparation process is characterized by: (1) addition of 50 to 75 pbw diene-based monomer and 0.1 to 0.5 pbw molecular weight control agent into a reactor, and then subjecting the reaction mixture to 1^{st} polymerization; (2) then - at a conversion rate of 10 to 40% in step (1) - continuous addition of 25 to 50 pbw diene-based monomer for 0.5 to 10 hours, and then subjecting the reaction mixture to 2^{nd} polymerization; (3) then - at a conversion rate of ≥ 92% in step (2) - termination of polymerization; and (4) optionally - in step (2) at a conversion rate of 40 to 85 % - addition of further 0.01 to 0.3 pbw molecular weight control agent.

The total process for the preparation of the ABS graft copolymer (no agglomeration step of rubber polymer) is a long time reaction which often takes about 16 hours.

KR-A 2010-0038700 discloses a process with a high conversion rate in a short time for the preparation of a diene based-rubber polymer latex having an average particle size of 260 to 500 nm by emulsion polymerization, wherein, in a first step 60 to 75 pbw of the total monomer is provided and polymerized at 65 to 70°C; then, at 30 to 40% conversion, in a second step 10 to 20 pbw of the total monomer is added and reacted at 72 to 75°C; thereafter, at 60 to 70% conversion, in a third step the remaining amount of monomer is added in a batch and reacted at 80 to 85°C; and wherein in a final step the polymerization is terminated at a conversion of not less than 95%. Reaction times are not disclosed. The rubber polymer is used for the preparation of ABS graft copolymers and blends thereof with SAN copolymers.

The intricate reaction temperature profile of said process is a clear disadvantage for a commercial process since changing the temperature quickly at commercial scale is practically not possible within stipulated time.

WO 2003/010214 discloses a semi batch emulsion polymerization process for the preparation of a diene rubber latex having a low crosslink density wherein in a first step an initial batch comprising a diene monomer, optional comonomers and optionally a chain transfer agent is provided, and then, a feed composition comprising further diene monomer, optional comonomers and a chain transfer agent is continuously added and the total composition is polymerized.

The initial batch may contain 10 to 30 wt.-% (often 12 to 28 wt.-% or 15 to 25 wt.-%) of the total diene monomer used. The feeding step may include about 80 or 100 wt.-% of the total chain transfer agent. The feeding is completed during the first 2 to 12 hours of the process (total reaction time 5-20 hours, temperature 49 to 85°C). The conversion is at least 80 wt.-%, often 90 or 93 wt.-%. The rubber latex has an average particle size of 60 to 120 nm and is used as substrate (60 to 500 nm) for the preparation of ABS graft copolymers and blends thereof with SAN copolymers.

The known processes are often still in need of improvement in respect to the gel content which if increased often results in a decreased swelling index or increased cross-linking density having the consequence of a lower efficiency (e.g. lower impact strength) of the rubber in the final ABS resin composition.

It is one object of the invention to provide a process for the preparation of a diene polymer latex having a high gel content (70 to 90 wt.-%, preferably > 75 wt.-%), controlled cross-linking, an improved swelling index (preferably > 25) and an increased median weight particle diameter D₅₀ (preferably > 90 nm). Moreover, the productivity of said process shall be improved (reduced polymerization time).

One aspect of the invention is a process for the preparation of a diene rubber latex (S-A1), by emulsion polymerization which process comprises steps (1) to (6):
(1) providing in a reactor an initial (slug) composition comprising at least one conjugated diene, preferably butadiene, at least one vinylaromatic monomer, preferably styrene, at least one chain transfer agent (CTA), at least one emulsifier, at least one initiator and water,
   wherein the amount of the conjugated diene is 22 to 32 wt.-%, preferably 26 to 30 wt.-%, - based on the total weight of the conjugated diene used in the process, the amount of the vinylaromatic monomer is 22 to 32 wt.-%, preferably 26 to 30 wt.-%, - based on the total weight of the vinyl aromatic monomer used in the process, and the amount of the chain transfer agent is 22 to 32 wt.-%, preferably 26 to 30 wt.-%, - based on the total weight of the chain transfer agent used in the process;
(2) polymerization of the initial (slug) composition for 30 to 90 min, preferably 50 to 70 min;
(3) within 70 to 110 minutes continuous feeding to the composition obtained in step (2) of:
   further 10 to 25 wt.-%, preferably 12 to 20 wt.-%, more preferably 15 to 18 wt.-%, conjugated diene - based on the total weight of the conjugated diene used in the process -,
   further 15 to 30 wt.-%, preferably 20 to 27 wt.-%, more preferably 23 to 26 wt.-%, vinylaromatic monomer - based on the total weight of the vinylaromatic monomer used in the process -, and
   further 20 to 35 wt.-%, preferably 25 to 30 wt.-%, chain transfer agent - based on the total weight of the chain transfer agent used in the process;
(4) further polymerization of the composition obtained in step (3) for 30 to 90 min, preferably 45 to 75 min;
(5) within 200 to 300 minutes, preferably 230 to 250 minutes, continuous (or incremental) feeding to the composition obtained in step (4) of: remaining conjugated diene, remaining vinylaromatic monomer (based on a total of 100 wt.-%, each), and of remaining chain transfer agent (based on a total of 100 wt.-%);
(6) further polymerization of the composition obtained in step (5) up to completion - preferably up to a conversion rate of 92 to 96% - of the polymerization -
where in all steps (1) to (6) the (reactor) temperature is kept at 60 to 75°C, preferably 65 to 70°C.

In the context of the invention the sequence of steps (1) to (6) generally is in a consecutive order. Often the process according to the invention consists of steps (1) to (6).

The term "diene rubber latex" means polydiene latices produced by emulsion polymerization of at least one conjugated diene and up to 30 wt.-%, preferably up to 20 wt.-%, more preferably up to 15 wt.-% (based on the total amount of monomers used for the production of polydiene latices) of one or more vinylaromatic monomers. The vinylaromatic monomer can be partly (less than 50%) replaced by a nitrile monomer, in particular acrylonitrile. Preferably the vinylaromatic monomer is used alone and is not replaced by a nitrile monomer.

In step (1) of the process according to the invention - so-called initial slug feeding step - in a reactor an initial (slug) composition comprising at least one conjugated diene, preferably butadiene, at least one vinylaromatic monomer, preferably styrene, at least one chain transfer agent (CTA), at least one emulsifier, at least one initiator and water are provided, wherein the amount of the conjugated diene is 22 to 32 wt.-% - based on the total weight of the conjugated diene used in the process, the amount of the vinylaromatic monomer is 22 to 32 wt.-% - based on the total weight of the vinyl aromatic monomer used in the process, and the amount of the chain transfer agent is 22 to 32 wt.-% - based on the total weight of the chain transfer agent used in the process.

Preferably in step (1) the amount of the conjugated diene is 26 to 30 wt.-% - based on the total weight of the conjugated diene used in the process, the amount of the vinylaromatic monomer is 26 to 30 wt.-% - based on the total weight of the vinyl aromatic monomer used in the process, and the amount of the chain transfer agent is 26 to 30 wt.-% - based on the total weight of the chain transfer agent used in the process.

Generally in the process according to the invention 70 to 99 wt.-%, preferably 85 to 99 wt.-%, more preferably 85 to 95 wt.-%, of at least one, preferably one, conjugated diene, preferably butadiene, and 1 to 30 wt.-%, preferably 1 to 15 wt.-%, more preferably 5 to 15 wt.-%, of at least one, preferably one, vinylaromatic monomer, preferably styrene, is used, based on the total amount of monomers used for the production of the diene rubber latex.

Suitable conjugated dienes are 1,3-butadiene (= butadiene), isoprene and chloroprene, in particular butadiene and/or isoprene, more preferred butadiene.

Suitable vinylaromatic monomers are styrene, alpha-methylstyrene, C₁-C₄-alkylstyrenes, preferably styrene.

Preferably in the process according to the invention butadiene is used together with 1 to 30 wt.-%, preferably 1 to 20 wt.-%, more preferably 1 to 15 wt.-%, most preferably 5 to 15 wt.-% styrene, based on the total amount of monomers used for the production of the diene rubber latex.

Preferably the (starting) diene rubber latex (S-A1) obtained according to the process of the invention consists of 70 to 99 wt.-% of butadiene and 1 to 30 wt.-% styrene.

More preferably the (starting) diene rubber latex (S-A1) obtained according to the process of the invention consists of 85 to 99 wt.-% of butadiene and 1 to 15 wt.-% styrene. Most preferably the (starting) diene rubber latex (S-A1) obtained according to the process of the invention consists of 85 to 95 wt.-% of butadiene and 5 to 15 wt.-% styrene.

In the process according to the invention as chain transfer agents (CTA) for example, alkylmercaptans, such as n-dodecylmercaptan, tert-dodecylmercaptan, dimeric alpha-methylstyrene and terpinolene may be used.

As initiator inorganic and organic peroxides, e.g. hydrogen peroxide, di-tert-butyl peroxide, cumene hydroperoxide, dicyclohexylpercarbonate, tert-butylhydroperoxide, p-menthanehydroperoxide, azo initiators such as azobisisobutyronitrile, inorganic per-salts such as ammonium, sodium or potassium persulfate, potassium perphosphate, sodium perborate as well as redox systems may be used, preferred are alkali persulfates, in particular potassium persulfate. Said initiators are usually used in amounts of 0.001 to 0.5 wt.-%, preferably 0.05 to 0.3 wt.-%, more preferably 0.05 to 0.35 wt.-%, most preferably 0.05 to 0.2 wt.-%.

As emulsifier preferably resin or rosin acid-based emulsifiers, in particular those are being used that contain alkaline salts of the rosin acids. Salts of the resin acids are also known as rosin soaps. Examples include alkaline soaps as sodium or potassium salts from disproportionated and/or dehydrated and/or hydrated and/or partially hydrated gum rosin with a content of dehydroabietic acid of at least 30 wt.-% and preferably a content of abietic acid of maximally 1 wt.-%. Furthermore, alkaline soaps as sodium or potassium salts of tall resins or tall oils can be used with a content of dehydroabietic acid of preferably at least 30 wt.-%, a content of abietic acid of preferably maximally 1 wt.-% and a fatty acid content of preferably less than 1 wt.-%.

Mixtures of the aforementioned emulsifiers can also be used for the process according to the invention. The use of alkaline soaps as sodium or potassium salts from disproportionated and/or dehydrated and/or hydrated and/or partially hydrated gum rosin with a content of dehydroabietic acid of at least 30 wt.-% and a content of abietic acid of maximally 1 wt.-% is advantageous.

Preferably the emulsifier is added in such an amount that the (final) median weight particle diameter D₅₀ of the diene rubber latex obtained according to the process of the invention is equal to or less than 120 nm, in particular in the range of 90 to 120 nm, preferably equal to or less than 115 nm, in particular often in the range of 90 to 115 nm.

Moreover, in the process according to the invention, in particular in step (1), salts and bases can be used. With bases the pH value, with salts the viscosity of the diene rubber latex is adjusted during the emulsion polymerization. Examples for bases include sodium hydroxide solution, potassium hydroxide solution; examples for salts include chlorides, sulfates, phosphates as sodium or potassium salts. The preferred base is sodium hydroxide solution and the preferred salt is tetrasodium pyrophosphate. The pH value of the diene rubber latex is between pH 7 and pH 13, preferably between 8 and pH 12, particularly preferably between pH 9 and pH 12.

The optionally used salts include for example alkali salts such as alkali halides, nitrates, sulfates, phosphates, pyrophosphates, preferably tetrasodium pyrophosphate, sodium sulfate, sodium chloride or potassium chloride. The amount of the optional salt may include 0 to 2 wt.-%, preferred 0 to 1 wt.-%, relative to the latex solids.

Preferably in step (1) of the process according to the invention the amount of the conjugated diene is 26 to 30 wt.-% - based on the total weight of the conjugated diene used in the process, the amount of the vinylaromatic monomer is 26 to 30 wt.-% - based on the total weight of the vinyl aromatic monomer used in the process, and the amount of the chain transfer agent is 26 to 30 wt.-% - based on the total weight of the chain transfer agent used in the process.

In the process according to the invention in all steps (1) to (6) the (reactor) temperature is kept at 60 to 75°C, preferably 65 to 70°C. Preferably in all steps (1) to (6) the (reactor) temperature is the same.

In Step (2) of the process according to the invention - so-called 1^{st} hold up step - the monomers comprised in the initial (slug) composition are polymerized. No additional charging of any ingredient is performed. The duration of step (2) is generally 30 to 90 minutes, preferably 50 to 70 minutes.

In step (2) of the process according to the invention usually a polymerization conversion of 25 to 30%, often 27%, is achieved.

In step (3) of the process according to the invention - so-called incremental feeding step - further 10 to 25 wt.-% conjugated diene - based on the total weight of the conjugated diene used in the process -, further 15 to 30 wt.-% vinylaromatic monomer - based on the total weight of the vinylaromatic monomer used in the process -, and further 20 to 35 wt.-% chain transfer agent - based on the total weight of the chain transfer agent used in the process, are continuously fed to the composition obtained in step (2) within 70 to 110 minutes, preferably within 80 to 100 minutes.

Preferably in step (3) 12 to 20 wt.-%, more preferably 15 to 18 wt.-%, conjugated diene - based on the total weight of the conjugated diene used in the process -, further 20 to 27 wt.-%, more preferably 23 to 26 wt.-%, vinylaromatic monomer - based on the total weight of the vinylaromatic monomer used in the process -, and further 25 to 30 wt.-%, chain transfer agent - based on the total weight of the chain transfer agent used in the process, are continuously (or incrementally) fed to the composition obtained in step (2) within 70 to 110 minutes, preferably within 80 to 100 minutes.

In Step (4) of the process according to the invention - so-called 2^{nd} hold up step - the composition obtained in step (3) is further polymerized for 30 to 90 minutes, preferably 45 to 75 minutes. No additional charging of any ingredient is performed.

In step (4) of the process according to the invention usually a polymerization conversion of 55 to 65%, often 60%, is achieved.

In step (5) of the process according to the invention - a further so-called incremental feeding step - the remaining conjugated diene, the remaining vinylaromatic monomer (based on a total of 100 wt.-%, each) and remaining chain transfer agent (based on a total of 100 wt.-%) are continuously fed to the composition obtained in step (4) within 200 to 300 minutes, preferably 230 to 250 minutes.

In step (6) - so-called ageing/cooking - the composition obtained in step (5) is further polymerized up to completion.

The completion of the polymerization in step (6) can be determined - on the basis whichever occurs first - by the total polymerization time of step (6) which is in the range of 1 to 4 hours, preferably 1 to 2.5 hours, more preferably 1.2 to 2 hours, in particular 1.5 hours, or a pressure drop in the reactor.

The term "pressure drop in the reactor" means the pressure in the reactor which during the polymerization generally is in the range of 6-8 bar drops to a final pressure of ≤ 3 bar. Preferably the pressure drop in the reactor is taken for the determination of the completion of the polymerization in step (6).

In the (final) polymer composition (= diene rubber latex S-A1) obtained in step (6) the conversion rate (calculated from the solid content of a sample and the mass of the substances used) of the monomers used in the process according to the invention preferably is 92 to 96%, based on the sum of monomers.

After completion of the polymerization process step (6) may advantageously be terminated by gradually cooling the obtained (final) polymer composition (= (starting) diene rubber latex (S-A1)) preferably to a temperature in the range of 40 to 50°C.

One further aspect of the invention is a (starting) diene rubber latex (S-A1) obtained by the process according to the invention.

The (starting) diene rubber latex (S-A1) obtained according to the process of the invention generally has a median weight particle diameter D₅₀ of equal to or less than 120 nm, in particular in the range of 90 to 120 nm, preferably equal to or less than 115 nm, in particular often in the range of 90 to 115 nm, in particular more often in the range of 94 to 110 nm. The median weight particle diameter D₅₀, also known as the D₅₀ value of the integral mass distribution, is defined as the value at which 50 wt.-% of the particles have a diameter smaller than the D₅₀ value and 50 wt.-% of the particles have a diameter larger than the D₅₀ value. The median weight particle diameter D₅₀ is determined by light scattering in particular with a Beckman Coulter (USA) particle sizer (Model LS13320).

The (starting) diene rubber latex (S-A1) obtained according to the process of the invention generally has a gel content of 70 to 90 wt.-%, preferably of > 75 wt.-%, based on the water insoluble solids of said latex. The gel content is measured in accordance with ASTM D3616 - 95(2019).

The total solid content (TSC) of the (starting) diene rubber latex (S-A1) obtained according to the process of the invention is preferably 25 to 44 wt.-%, more preferably 30 to 43 wt.-%, particularly preferably 35 to 42 wt.-%.

The TSC of the diene rubber latex is measured by taking an accurately weighed quantity of 10g sample and drying it in air oven for 30 minutes at 180°C. Then the dried sample is cooled, weighed again and the TSC is calculated in percentage as weight of dried mass upon initial weight of diene rubber latex.

The conversion rate of the polymerization reaction can be calculated from the TSC value.

The conversion rate (calculated from the solid content of a sample and the mass of the substances used) of the monomers used in the process according to the invention generally is more than 90% and preferably lower than 99%, preferably 92 to 96%, in each case based on the sum of monomers.

Moreover, the (starting) diene rubber latex (S-A1) has a swelling index of preferably > 25%. The swelling index of the diene rubber latex is measured in accordance with ASTM D 3616 - 95(2019).

The high gel content and the optimized swelling index of the (starting) diene rubber latex (S-A1) are due to the controlled crosslinking achieved by the process according to the invention.

A further aspect of the invention is the use of the (starting) diene rubber latex (S-A1) obtained by the process according to the invention as seed latex for the preparation of ABS graft rubber copolymers, and corresponding graft rubber copolymers (A) obtained by a process as described hereinafter.

### Graft rubber copolymer (A) (= component (A)

Graft rubber copolymer (A) - consisting of (preferably 15 to 60 wt.-%) a graft sheath (A2) and (preferably 40 to 85 wt.-%) a graft substrate (an agglomerated diene rubber latex) (A1) - is obtained by a process comprising the steps:
α) providing a (starting) diene rubber latex (S-A1) obtained according to the process of the invention; β) agglomeration of latex (S-A1) with at least one acid anhydride to obtain an agglomerated diene rubber latex (A1) with a median weight particle diameter D₅₀ of 200 to 400 nm; and γ) grafting of the agglomerated diene rubber latex (A1) by emulsion polymerization of styrene and acrylonitrile in a weight ratio of 95:5 to 50:50 (= graft sheath (A2)) to form graft rubber copolymer (A).

Preferably in step α) a diene rubber latex S-A1 obtained according to the process of the invention is provided having a median weight particle diameter D₅₀ of equal to or less than 115 nm, in particular in the range of 90 to 115 nm, often 94 to 110 nm.

Then the (starting) diene rubber latex (S-A1) is subjected to agglomeration with at least one acid anhydride, preferably acetic anhydride, to obtain an agglomerated diene rubber latex (A1). The agglomeration is described in detail on pages 8 to 12 of WO 2012/022710 A1.

Preferably acetic anhydride, more preferably in admixture with water, is used for the agglomeration. Preferably the agglomeration step β) is carried out by the addition of 0.1 to 2 parts by weight of acetic anhydride per 100 parts of the starting rubber latex solids.

The agglomerated rubber latex (A1) is preferably stabilized by addition of further emulsifier while adjusting the pH value of the latex (A1) to a pH value (at 20°C) between pH 7.5 and pH 11, preferably of at least 8, particular preferably of at least 8.5, in order to minimize the formation of coagulum and to increase the formation of a stable agglomerated rubber latex (A1) with a uniform particle size. As further emulsifier preferably rosin-acid based emulsifiers as described above for the preparation of the diene rubber latex S-A1 are used. The pH value is adjusted by use of bases such as sodium hydroxide solution or preferably potassium hydroxide solution.

The obtained agglomerated latex rubber latex (A1) has a median weight particle diameter D₅₀ of generally 200 to 400 nm, preferably 230 to 350 nm. The obtained agglomerated latex rubber latex (A1) preferably is mono-modal.

In step γ) the agglomerated rubber latex (A1) is grafted to form a graft rubber copolymer (A). Suitable grafting processes are described in detail on pages 12 to 14 of WO 2012/022710. Generally in step γ) of the afore-mentioned process graft rubber copolymer (A) is obtained by emulsion polymerization of styrene and acrylonitrile in a weight ratio of 95:5 to 50:50 to obtain a graft sheath (A2) (in particular a graft shell) in the presence of the above-mentioned agglomerated butadiene rubber latex (A1) (= graft substrate).

Preferably graft rubber copolymer (A) has a core-shell-structure.

Preferably graft rubber copolymer (A) consists of 15 to 60 wt.-% of a graft sheath (A2) and 40 to 85 wt.-% of a graft substrate - an agglomerated butadiene rubber latex - (A1), where (A1) and (A2) sum up to 100 wt.-%.

Preferably in step γ) of the afore-mentioned process graft rubber copolymer (A) is obtained by emulsion polymerization of styrene and acrylonitrile in a weight ratio of 80:20 to 65:35 to obtain a graft sheath (A2), in the presence of at least one agglomerated diene rubber latex (A1) with a median weight particle diameter D₅₀ of 200 to 400 nm, preferably 230 to 350 nm.

It is possible for styrene and/or acrylonitrile used in process step γ) to be replaced partially (less than 50 wt.-%, preferably less than 20 wt.-%, more preferably less than 10 wt.-%, based on the total amount of monomers used for the preparation of (A2)) by alpha-methylstyrene, methyl methacrylate or maleic anhydride or mixtures thereof.

More preferably the at least one, preferably one, graft rubber copolymer (A) consists of 20 to 50 wt.-% of a graft sheath (A2) and 50 to 80 wt.-% of a graft substrate (A1).

Most preferably graft rubber copolymer (A) consists of 30 to 45 wt.-% of a graft sheath (A2) and 55 to 70 wt.-% of a graft substrate (A1).

Preferably the obtained graft rubber copolymer (A) has a core-shell-structure; the graft substrate (A1) forms the core and the graft sheath (A2) forms the shell.

Preferably for the preparation of the graft sheath (A2) styrene and acrylonitrile are not partially replaced by one of the above-mentioned comonomers; preferably styrene and acrylonitrile are polymerized alone in a weight ratio of 95:5 to 50:50, preferably 80:20 to 65:35.

Preferably the graft polymerization is carried out by use of a redox initiator system comprising at least one, preferably one, redox system initiator (oxidant) selected from at least one organic peroxide, in particular organic hydroperoxide such as cumene hydroperoxide or tert.-butyl hydroperoxide. Cumene hydroperoxide is in particular preferred. For the other components (= activators) of the redox initiator system any reducing agent and metal component known from literature can be used.

Preferably grafting step γ) of the afore-mentioned process is carried out in presence of at least one agglomerated diene rubber latex (A1) with a median weight particle diameter D₅₀ of 200 to 400 nm, more preferably 230 to 350 nm.

According to a preferred embodiment grafting of said at least one agglomerated butadiene rubber latex (A1) is carried out by emulsion polymerization of styrene and acrylonitrile, preferably in a weight ratio of 95:5 to 65:35, in presence of at least one agglomerated butadiene rubber latex to obtain a graft rubber copolymer at a temperature of 40 to 90°C, it being possible for styrene and/or acrylonitrile to be replaced partially (less than 50 wt.-%) by alpha-methylstyrene, methyl methacrylate, maleic anhydride or N-phenylmaleimide or mixtures thereof; wherein grafting step γ) comprises sub-steps γ1), γ2) and γ3):
γ1) slug feeding:
   - feeding of 10 to 45 wt.-%, preferably 20 to 40 wt.-%, more preferably 25 to 30 wt.-% of styrene and acrylonitrile - based on the total amount styrene and acrylonitrile - in one portion - to the at least one agglomerated butadiene rubber latex (A1), and
   - addition of 0.01 to 0.06 parts by weight - based on 100 parts by weight of styrene and acrylonitrile and agglomerated butadiene rubber latex (A1) - of at least one redox system initiator selected from at least one organic peroxide in at least one portion or continuously,
      then - after the feeding of styrene and acrylonitrile and initiator,
   - polymerization for 30 to 90 minutes to obtain a reaction mixture;
γ2) incremental feeding:
   then, preferably within 5 hours, more preferably within 3 hours, to the reaction mixture obtained in step γ1),
   - feeding the remaining amount of styrene and acrylonitrile - based on the total amount of styrene and acrylonitrile continuously, and
   - further addition of 0.05 to 0.12 parts by weight of said at least one redox system initiator - based on 100 parts by weight of styrene and acrylonitrile and agglomerated butadiene rubber latex - continuously to obtain a reaction mixture;
γ3) boost addition:
   then, to the reaction mixture obtained in step γ2),
   - addition of 0.01 to 0.05 parts by weight, preferably 0.02 to 0.04 parts by weight, - based on 100 parts by weight of styrene and acrylonitrile and agglomerated butadiene rubber latex (A1) - of said at least one redox system initiator, and then proceed for preferably 1 hour for aging of polymer.

Further details to polymerization conditions, emulsifiers, initiators, molecular weight regulators which may be used in grafting step γ) are described in WO 2012/022710 (cp. pages 12-14).

### Thermoplastic molding composition

A further aspect of the invention is a thermoplastic molding composition comprising at least one graft rubber copolymer (A) obtained as hereinbefore described and at least one rubber-free thermoplastic (co)polymer (B) (= component (B)).

Rubber-free thermoplastic (co)polymers (B) generally are (co)polymers of vinyl monomers, preferably copolymers of styrene and acrylonitrile (SAN-copolymers) in a weight ratio of from 80:20 to 60:40, it being possible for styrene and/or acrylonitrile to be replaced wholly or partially by alpha-methylstyrene, methyl methacrylate, maleic anhydride or N-phenylmaleimide. It is preferred that styrene and acrylonitrile are not partially replaced by one of the above-mentioned comonomers. Component (B) is preferably a copolymer of styrene and acrylonitrile.

Particular preference is given to SAN-copolymers (B) having a content of incorporated acrylonitrile units of ≤ 35 wt-%, preferably 25 to 35 wt.-%, more preferably 26 to 30 wt.-%. Said SAN-copolymers often have weight average molecular weights Mw of from 80,000 to 300,000 g/mol, more often 90,000 to 250,000 g/mol. Suitable SAN copolymers often have a melt flow index in the range of from 7 to 80 g/10 min at 220°C/10 kg.

Details relating to the preparation of such SAN-copolymers are described, for example, in DE-A 2 420 358, DE-A 2 724 360 and in Kunststoff-Handbuch ([Plastics Handbook], Vieweg-Daumiller, volume V, (Polystyrol [Polystyrene]), Carl-Hanser-Verlag, Munich, 1969, pp. 122 ff., lines 12 ff.). Such copolymers prepared by mass (bulk) or solution polymerization in, for example, toluene or ethylbenzene, have proved to be particularly suitable.

In general, the thermoplastic molding composition according to the invention may comprise the graft rubber copolymer (A) in amounts of from 1 to 90 parts by weight, preferably from 5 to 50 parts by weight, more preferably 20 to 45 parts by weight and the rubber-free thermoplastic (co) polymer (B), preferably a copolymer of styrene and acrylonitrile, in amounts of from 10 to 99 parts by weight, preferably from 50 to 95 parts by weight, more preferably 55 to 80 parts by weight.

If the thermoplastic molding composition only comprises (consists of) components (A) and (B) the afore-mentioned parts by weight of (A) and (B) in corresponding weight percent (wt.-%) sum to 100 wt.-%.

In addition to the mentioned polymer components (A) and (B), the thermoplastic molding composition according to the invention may contain further rubber-free thermoplastic (co)polymers (TP) not composed of vinyl monomers.

Often the ratio of the total parts by weight of components (A) and (B) to the parts by weight of (co)polymer (TP) is 10:90 to 50:50.

The thermoplastic resins as the rubber-free copolymer (TP) in the molding compositions according to the invention which are used in addition to the mentioned polymer components (A) and (B), include for example polycondensation products, for example aromatic polycarbonates, aromatic polyester carbonates, polyesters, polyamides.

Suitable thermoplastic polycarbonates and polyester carbonates are known and described on pages 14 to 18 of WO 2012/022710.

Preferably the thermoplastic molding composition according to the invention does not comprise a further rubber-free thermoplastic (co)polymer (TP) (= component (TP)).

Furthermore, the thermoplastic molding composition according to the invention may optionally further comprise additives and/or processing aids (C) (= component (C)).

Various additives and/or processing aids (C) may be added to the thermoplastic molding composition according to the invention in amounts of from 0.01 to 5 wt.-% - where components (A), (B) and (C) sum to 100 wt.-% - as assistants and processing additives. Suitable additives and/or processing aids (C) include all substances customarily employed for processing or finishing the polymers.

Examples include, for example, dyes, pigments, colorants, fibers/fillers, antistatics, antioxidants, stabilizers for improving thermal stability, stabilizers for increasing photostability, stabilizers for enhancing hydrolysis resistance and chemical resistance, anti-thermal decomposition agents, dispersing agents, and in particular external/internal lubricants that are useful for production of molded bodies/articles.

These additives and/or processing aids may be admixed at any stage of the manufacturing operation, but preferably at an early stage in order to profit early on from the stabilizing effects (or other specific effects) of the added substance.

Preferably component (C) is at least one additive and/or processing aid selected from the group consisting of dispersing agents, lubricants and antioxidants.

Suitable lubricants/glidants and demolding agents include stearic acids, stearyl alcohol, stearic esters, amide waxes (bis-stearylamide, in particular ethylenebis-stearamide), polyolefin waxes and/or generally higher fatty acids, derivatives thereof and corresponding fatty acid mixtures comprising 12 to 30 carbon atoms.

Examples of suitable antioxidants include sterically hindered monocyclic or polycyclic phenolic antioxidants which may comprise various substitutions and may also be bridged by substituents. These include not only monomeric but also oligomeric compounds, which may be constructed of a plurality of phenolic units. Hydroquinones and hydroquinone analogs are also suitable, as are substituted compounds, and also antioxidants based on tocopherols and derivatives thereof.

It is also possible to use mixtures of different antioxidants. It is possible in principle to use any compounds which are customary in the trade or suitable for styrene copolymers, for example antioxidants from the Irganox range. In addition to the phenolic antioxidants cited above by way of example, it is also possible to use so-called costabilizers, in particular phosphorus- or sulfur-containing costabilizers. These phosphorus- or sulfur-containing costabilizers are known to those skilled in the art.

For further additives and/or processing aids, see, for example, "Plastics Additives Handbook", Hans Zweifel,, 6th edition, Hanser Publ., Munich, 2009.

Specific examples of suitable additives and/or processing aids are mentioned on pages 23 to 26 of WO 2014/170406.

Preferred are thermoplastic molding compositions according to the invention comprising (or consisting of):
(A) 5 to 50 wt.-%, preferably 20 to 45 wt.-%, of at least one graft rubber copolymer (A);
(B) 50 to 95 wt.-%, preferably 55 to 80 wt.-%, of at least one rubber-free thermoplastic (co)polymer (B), in particular a copolymer of styrene and acrylonitrile;
(C) 0 to 5 wt.-%, preferably 0.01 to 3 wt.-%, of at least one additive and/or processing aid (C);
where (A), (B) and, if present (C), sum to 100 wt.-%.

If component (C) is present, its minimum amount is 0.01 wt.-%, based on the entire thermoplastic molding composition.

The thermoplastic molding composition of the invention may be produced from the afore-mentioned components (A), (B) and, if present (C) and/or (TP), by any known method. However, it is preferable when the components are premixed and blended by melt mixing, for example conjoint extrusion, preferably with a twin-screw extruder, kneading or rolling of the components. This is done at temperatures in the range of from 160°C to 400°C, preferably from 180°C to 280°C, more preferably 220° C to 250°. In a preferred embodiment, the component (A) is first partially or completely isolated from the aqueous dispersion obtained in the respective production steps. For example, the graft rubber copolymers (A) may be mixed as a moist or dry crumb/powder (generally having a residual moisture of less than 2%, in particular less than 0.5%) with the rubber-free thermoplastic (co)polymer (B), complete drying of the graft copolymers (A) then taking place during the mixing. The drying of the particles may also be performed as per DE-A 19907136.

The thermoplastic molding compositions according to the invention have good mechanical and thermal properties which are due to the high gel content, the controlled cross-linking, the improved swelling index and the increased median weight particle diameter D₅₀ of the diene rubber latex (S-A1) used for the preparation of ABS graft rubber copolymer (A) which is obtained by a process having a significant reduced polymerization time. Said good mechanical and thermal properties of the thermoplastic molding compositions are irrespective of the particle size D₅₀ of the agglomerated rubber latex (A1) used for the preparation of ABS graft rubber copolymer (A) and thus a robust process window for production technology is given.

The invention further provides for the use of the described thermoplastic molding composition for the production of molded articles.

Processing may be carried out using the known processes for thermoplast processing, in particular production may be effected by thermoforming, extruding, injection molding, calendaring, blow molding, compression molding, press sintering, deep drawing or sintering.

One further aspect of the invention is the use of graft rubber copolymers (A) according to the invention and/or of thermoplastic molding compositions according to the invention in the automobile and household industry.

The invention is further illustrated by the examples and the claims.

### Examples

### Test Methods

Total solid content (TSC): TSC of latex at each stage is measured by taking an accurately weighed quantity of 10 g sample and drying it in air oven for 30 minutes at 180°C. Then the dried sample is cooled, weighed again and TSC calculated in percentage as weight of dried mass upon initial weight of latex. Conversion of the polymerization reaction can be calculated from the TSC value.

pH: The pH of the latex at various stages of polymerization is measured using Horiba LAQUA benchtop pH meter of Horiba, Japan.

Gel content and swelling Index: Gel content in percentage and swell index value of the polymer latex is measured in accordance with ASTM D3616 - 95(2019).

Particle size (median weight particle diameter d50): The median weight particle diameter d50 is determined by light scattering with a Beckman Coulter (USA) particle sizer (Model LS13320).

### Composition of Graft rubber copolymer (A)

The composition (wt.-%) of the graft rubber copolymer comprising structure units derived from acrylonitrile (AN), styrene (STY) and butadiene (BD) can be measured by FTIR techniques considering peaks heights corresponding to specific functions present in the material.

### Graft rubber copolymer (A)

### Preparation of rubber latex S-A1 made from butadiene (90 wt.-%) and styrene (10 wt.%)

The polybutadiene (seed) latex S-A1 was produced by an emulsion polymerization process using metal salts as initiator and a rosin based emulsifier. A diene rubber latex S-A1-1 was prepared by a process comprising six steps.

### Step 1: Initial slug feeding

In this initial step, primarily the entire amount (100%) of rosin acid based emulsifier along with sodium hydroxide was fed at once into the reactor. Water and TSPP (tetra sodium pyrophosphate) were also added with the charge of rosin acid based emulsifier. The monomers were added as a seed monomer charge. An initial charge of TDDM (tert-dodecylmercaptan) as chain transfer agent charge (CTA) was also added at once. The entire amount (100%) of the initiator was also fed at once. The temperature of the reactor was kept at 68°C. The amounts of all ingredients used for the slug feeding are shown in Table 1.

**Table 1**

| Ingredients used for initial slug feeding (step 1) | | parts by weight (pbw) |
|---|---|---|
| Emulsifier | Potassium Rosinate | 2.854 |
| | Tetra sodium pyrophosphate | 0.543 |
| | NaOH. | 0.01554 |
| | WATER | 81.939 |
| CTA | t-dodecyl mercaptan | 0.1400 |
| Monomer | Styrene | 2.800 |
| Monomer | 1,3-Butadiene | 25.2 |
| Initiator | Potassium persulfate (KPS) | 0.109 |
| | WATER | 6.0 |

### Step 2: Hold up stage for 60 minutes

In this step, the composition according to Table 1 above was allowed to react to form polymer chains for 60 minutes. No additional charging of any ingredients was performed. The temperature of the reactor was kept at 68°C. The conversion rate of the polymerization achieved in this step was 27%.

### Step 3: Incremental feeding of monomers and CTA

Then in a next step following the first holdup stage (step 2), further monomers and chain transfer agent (CTA = TDDM) were continuously fed. The feeding was completed in 90 min. The reactor temperature was also kept at 68°C. The amounts of the monomers and CTA used for the incremental feeding in step (3) are shown in Table 2.

**Table 2**

| Amounts of monomers and CTA used in step (3) | | Pbw |
|---|---|---|
| Monomers | 1,3-Butadiene | 16.4 |
| | Styrene | 2.742 |
| CTA | t-dodecyl mercaptan | 0.128 |

### Step 4: Hold up stage for 60 minutes

In this step, the composition obtained in step (3) was polymerized for further 60 minutes. No additional charging of any ingredients was performed. The reactor temperature was also kept at 68°C. The conversion rate of the polymerization achieved in this step was 60%.

### Step 5: Incremental feeding of monomers and CTA

Then in a next step following the second holdup stage (step 4), the remaining monomers and chain transfer agent (TDDM) were continuously/incrementally fed to the reactor. The feeding was completed within 240 min. The reactor temperature was also kept at 68°C.

The amount of the monomers and CTA used for the incremental feeding in step (5) is shown in Table 3.

**Table 3**

| Amounts of monomers and CTA used in step (5) | | pbw |
|---|---|---|
| Monomers | 1,3-Butadiene | 48.4 |
| | Styrene | 4.46 |
| CTA | t-dodecyl mercaptan | 0.23 |
| | Water | 46.139 |

### Step 6: Ageing/cooking

After the incremental feeding in step (5) was finished the obtained composition was allowed to continue polymerization (= ageing). The completion of the reaction in step (6) was determined by a drop of the reaction pressure to a pressure of ≤ 3 bar. The conversion rate of the polymerization achieved in this step was 94%. The reaction was then stopped by gradually cooling the polymer latex to 45°C.

The solid content (TSC), the pH value, the median weight particle diameter d₅₀, the gel content and the swelling index of the diene rubber latex (S-A1-1) was determined, see

**Table 4:**

| | pH | TSC | d50 (nm) | Gel (wt.-%) | Swelling Index |
|---|---|---|---|---|---|
| S-A1-1 | 9.9 | 41.8 | 95 | 78.2 | 29 |
| S-A1-C | 9.4 | 40.7 | 86 | 77.2 | 21.8 |

Table 4 shows that the obtained diene rubber latex S-A1-1 has an improved particle size d50, high gel content and a significantly improved swelling index in comparison to a diene rubber latex S-A1-C obtained according to a non-inventive process with only a single hold up step as described hereinafter.

The components used for the preparation of diene rubber latex S-A1-C are shown in Table 4a:

| | Components | pbw |
|---|---|---|
| initial slug feeding | | |
| Emulsifier | ROSIN (100%) | 2.854 |
| | TSPP | 0.543 |
| | NaOH | 0.01554 |
| | HOT WATER | 81.939 |
| chain transfer agent (CTA) | TDDM (14 wt.-% - based on total TDDM used in the process) | 0.1044 |
| Monomer | Styrene (14 wt.-% - based on total styrene used in the process) | 1.4 |
| Monomer | 1,3-Butadiene (14 wt.-% - based on total 1 ,3-butadiene used in the process) | 12.6 |
| Initiator | KPS | 0.109 |
| | WATER | 6.0 |
| Continuous feeding | | |
| Monomer | 1,3-Butadiene | 77.4 |
| Monomer | Styrene | 8.60 |
| chain transfer agent | TDDM | 0.642 |
| | Water | 46.139 |

Diene rubber latex S-A1-C (non-inventive) has been obtained by a process as described before for the preparation of diene rubber latex S-A1-1 according to the invention except that in the process for the preparation of the starting diene rubber latex S-A1-C only one hold up stage (step 2) is present and in step (1) the amounts of the conjugated diene, the vinylaromatic monomer and the chain transfer agent - based on the total conjugated diene and vinylaromatic monomer and CTA used in the process - is 14 wt.-%, each.

Thus in the process used for the preparation of diene rubber latex S-A1-C step (4) (second hold up stage) is absent and step (3) includes step (5). The continuous feeding (step 3) of the remaining monomers and remaining CTA (= TDDM) was completed within 720 minutes.

Diene rubber latices S-A1-CX and S-A1-CY (cp. Table 5) used for comparison purposes (not according to the invention, no prior art) were prepared as described in the process according to the invention above except that in the first step (initial slug feeding) of the process 14 wt.-% (S-A1-CX) or 21 wt.-% (S-A1-CY) of each of the monomers and of the CTA - based on the total butadiene, the total styrene and the total CTA used in the process - have been used. Samples were taken after a reaction time of 2, 4 and 6 hours and - after completion of the feeding of the monomers and the CTA - at the start (assigned as zero hour again) and the end (= after completion of the reaction) of ageing step (6) of the process. For each sample the median weight particle diameter d50 was determined.

Table 5 shows the dependency of the particle size d50 of the obtained diene rubber latex on the amount of monomers and CTA used for the initial slug feeding in step 1 of a process as afore-mentioned.

**Table 5**

| Sample | Reaction time (h) | Particle Size d50 (nm) | | | | |
|---|---|---|---|---|---|---|
| | | S-A 1-CX | S-A1-CY | S-A 1-3 | S-A 1-2 | S-A1-1 |
| Slug ratio (wt.-%) | 0 | 14 | 21 | 28 | | |
| | 2 | 66 | 68 | 96 | 96 | 92 |
| | 4 | 63 | 78 | 98 | 100 | 91 |
| | 6 | 64 | 77 | 104 | 105 | 92 |
| Ageing* | 0 | 70 | 87 | 109 | 105 | 93 |
| | after reaction completion** | 70 | 86 | 111 | 108 | 95 |

| | | | | | | |
|---|---|---|---|---|---|---|
| * step (6) of the process **pressure drop below 3 bar | | | | | | |

The particle size d50 (nm) of the obtained diene rubber latices S-A1-1, S-A1-2 and S-A1-3 (28 wt.-% monomers used in slug feeding step (1)) is significantly improved in comparison to diene rubber latices S-A1-CX and S-A1-CY (14 wt-% or 21 wt.-% monomers used in slug feeding step (1)).

### Agglomeration of diene rubber latex S-A1

The production of agglomerated butadiene rubber latices (A1) was performed with the specified amounts of the components mentioned in table 6. In each of six different batches a butadiene rubber latex (S-A1-1) was provided first at 25°C and was adjusted if necessary with deionized water to a certain concentration and stirred. To each of said batches increasing amounts of acetic anhydride - based on 100 parts of the solids from the butadiene rubber latex (S-A1-1) - as fresh produced aqueous mixture were incrementally added in order to achieve a median weight particle size d50 in the range of 230nm to 350nm. The mixture of each batch was stirred for 60 seconds. After this the agglomeration was carried out for 30 minutes without stirring. Subsequently KOH was added as an aqueous solution to each of the agglomerated latices and mixed by stirring.

After filtration through a 50 µm filter the amount of coagulate as solid mass - based on 100 parts solids of the butadiene rubber latex (S-A1-1) - was determined.

**Table 6**

| Component | Latex | Batch 230 nm | Batch 250 nm | Batch 280 nm | Batch 310 nm | Batch 330 nm | Batch 350 nm |
|---|---|---|---|---|---|---|---|
| | (wt.-%) | Pbw | pbw | pbw | pbw | pbw | pbw |
| S-A1-1 | 41.8 | 100 | 100 | 100 | 100 | 100 | 100 |
| Acetic Anhydride | | 0.88 | 0.90 | 0.92 | 0.93 | 0.94 | 0.97 |
| Rosin | 25 | 0.004 | 0.004 | 0.004 | 0.004 | 0.004 | 0.004 |
| KOH | 48 | 0.0225 | 0.0225 | 0.0225 | 0.0225 | 0.0225 | 0.0225 |
| Water | | 2.5 | 2.5 | 2.5 | 2.5 | 2.5 | 2.5 |

The total solid content (TSC) of the agglomerated butadiene rubber latex (A1) (samples A1-1 to A1-6) and median weight particle diameter d50 were determined (Table 7a).

**Table 7a**

| Batch | 230 nm | 250 nm | 280 nm | 310 nm | 330 nm | 350 nm |
|---|---|---|---|---|---|---|
| d50 (nm) | A1-1 | A1-2 | A1-3 | A1-4 | A1-5 | A1-6 |
| | 235 | 248 | 283 | 315 | 332 | 346 |
| TSC | 33.6 | 34.4 | 33.5 | 33.8 | 33.7 | 32.4 |

It can be seen that relatively low amounts of acetic anhydride are needed to yield an agglomerated butadiene rubber (A1) having a particle size d50 in the range of 235 to 346 nm.

The agglomeration of diene rubber latex S-A1-C (non-inventive, used for comparison purposes) was performed as hereinbefore described for diene rubber latex S-A1-1. The TSC and the median weight particle diameter d50 of the obtained agglomerated butadiene rubber latex (A1-C) - (samples A1-C1 to A1-C6) - were determined (cp. Table 7b).

**Table 7b**

| Batch | 230 nm | 250 nm | 280 nm) | 310 nm | 330 nm | 350 nm |
|---|---|---|---|---|---|---|
| d50 (nm) | A1-C1 | A1-C2 | A1-C3 | A1-C4 | A1-C5 | A1-C6 |
| | 234 | 257 | 278 | 306 | 326 | 354 |
| TSC | 35.5 | 34.8 | 34.6 | 32.0 | 34.1 | 35.0 |

### Preparation of core-shell graft rubber copolymer (A)

The production of the graft rubber copolymer (A) was performed by use of the components in the amounts as given in Table 8. For the graft polymerization of each of the agglomerated butadiene rubber latices A1-1 to A1-6 (cp. Table 7a) a redox initiator system comprising cumene hydrogen peroxide was used.

**Table 8**

| | Components | pbw |
|---|---|---|
| Slug feeding | | |
| | agglomerated butadiene rubber (A1) | 58.00 |
| Monomers | Acrylonitrile | 3.12 |
| | Styrene | 8.88 |
| Modifier | t-dodecyl mercaptan | 0.10 |
| Emulsifier | Potassium Rosinate | 0.26 |
| | Water | 2.20 |
| | Water | 6.58 |
| | Dextrose | 0.152 |
| Activator | tetra-sodium pyrophosphate | 0.119 |
| | FeSO₄ | 0.0034 |
| Oxidant | Cumene Hydroperoxide | 0.04 |

| Incremental feeding | | |
|---|---|---|
| | Acrylonitrile | 7.80 |
| Mixed Monomers | Styrene | 22.20 |
| Modifier | t-dodecyl mercaptan | 0.30 |
| Emulsifier | Potassium Rosinate | 0.60 |
| | Water | 6.95 |
| Oxidant | Cumene Hydroperoxide | 0.08 |
| Water | Water | 16.81 |

| Boost Addition | | |
|---|---|---|
| Activator | Water | 5.65 |
| | Dextrose | 0.07 |
| | tetra-sodium pyrophosphate | 0.06 |
| | FeSO₄ | 0.0016 |
| Oxidant | Cumene Hydroperoxide | 0.03 |

The grafting process γ) was performed by emulsion polymerization of styrene and acrylonitrile, in presence of agglomerated butadiene rubber latex (A1) at a temperature of 65 °C:
γ1) First of all (= slug feeding) styrene, acrylonitrile and the redox initiator system (= oxidant and activator) were fed in one portion to the agglomerated butadiene rubber latex (A1), then - after the feeding of styrene and acrylonitrile and redox initiator system - polymerization for 60 minutes to obtain a reaction mixture;
γ2) then, (= incremental feeding) within 3 hours, to the reaction mixture obtained in step γ1), the remaining amount of styrene and acrylonitrile - based on the total amount of styrene and acrylonitrile - was fed continuously, and further redox initiator system was added continuously to obtain a reaction mixture;
γ3) then, (= boost addition) to the reaction mixture obtained in step γ2) further redox initiator system was added and then the process was proceeded for 1 hour for aging of the graft rubber copolymer latex.

The obtained graft rubber copolymer latex was stabilized with ca. 0.6 wt.-parts of a phenolic- and thio- (distearyl thio dipropopionate) antioxidant and precipitated with H₂SO₄ washed with water and the wet graft powder was dried at 70°C (residual humidity less than 0.5 wt.-%).

The obtained products are graft rubber copolymers A-1, A-2, A-3, A-4, A-5 and A-6 which are characterized by a low volatile monomer content and an improved impact transfer capacity.

The particle size (d50) of the graft rubber copolymers (A) (samples A-1 to A-6) obtained according to the process of the invention (dual hold up step in the preparation of the diene rubber latex) is shown in Table 9a.

**Table 9a**

| Batch | (230 nm) | (250 nm) | (280 nm) | (310 nm) | (330 nm) | (350 nm) |
|---|---|---|---|---|---|---|
| d50 (nm) | A-1 | A-2 | A-3 | A-4 | A-5 | A-6 |
| | 315 | 327 | 335 | 355 | 365 | 385 |
| TSC | 35.8 | 34.8 | 34.3 | 34.7 | 35.9 | 36 |

The composition of the graft rubber copolymers (A) obtained according to the process of the invention (dual hold up step in the preparation of the diene rubber latex) is shown in Table 10 a.

**Table 10a**

| ABS graft rubber copolymer (particle size d50 (nm) of agglomerated butadiene rubber latex) | Acrylonitrile (AN) (wt.-%) | Butadiene (BD) (wt.-%) | Styrene (STY) (wt.-%) |
|---|---|---|---|
| A-1 (230 nm) | 12.7 | 50.9 | 36.4 |
| A-2 (250 nm) | 12.4 | 49.9 | 37.6 |
| A-3 (280 nm) | 12.7 | 50.5 | 36.7 |
| A-4 (310 nm) | 12.3 | 50.5 | 37.2 |
| A-5 (330 nm) | 12.2 | 50.2 | 37.6 |
| A-6 (350 nm) | 12.7 | 50.4 | 36.9 |

Graft rubber copolymers A-C1 to A-C6 were prepared by the grafting process γ) as described hereinbefore, except that as agglomerated butadiene rubber latex (A1) agglomerated butadiene rubber latex A1-C (samples A1-C1 to A1-C6 (cp. Table 7b)) has been used.

The particle size (d50) of the graft rubber copolymers (A-C) (samples A-C1 to A-C6) obtained according to non-inventive process (only single hold up step in the preparation of the diene rubber latex) is shown in Table 9b.

**Table 9b**

| Batch | (230 nm) | (250 nm) | (280 nm) | (310 nm) | (330 nm) | (350 nm) |
|---|---|---|---|---|---|---|
| d50 (nm) | A-C1 | A-C2 | A-C3 | A-C4 | A-C5 | A-C6 |
| | 330 | 328 | 333 | 348 | 365 | 384 |
| TSC | 36.6 | 36.5 | 36.4 | 36.6 | 36.3 | 36.5 |

The composition of the graft rubber copolymers of comparative examples A-C1 to AC-6 - obtained according to a non-inventive process (only single hold up step in the preparation of the diene rubber latex) as described above - is shown in Table 10b.

**Table 10b**

| ABS graft copolymers (particle size d50 (nm) of agglomerated butadiene rubber latex) | AN (wt.-%) | BD (wt.-%) | STY (wt.-%) |
|---|---|---|---|
| A-C1 (230 nm) | 12.9 | 50.5 | 36.6 |
| A-C2 (250 nm) | 12.8 | 49.8 | 37.4 |
| A-C3 (280 nm) | 13.3 | 50.1 | 36.6 |
| A-C4 (310 nm) | 12.6 | 50.4 | 37.1 |
| A-C5 (330 nm) | 12.5 | 50.4 | 37.1 |
| A-C6 (350 nm) | 12.4 | 50.9 | 36.7 |

### Thermoplastic Molding Compositions

Each of the obtained graft rubber copolymers A1 to A6 and - for comparison purposes - each of graft rubber copolymers A-C1 to A-C6 was compounded with SAN-copolymer B1 or B2 to check the property profile of the obtained ABS molding composition.

SAN copolymer B1 - a grade of medium flow index - was used in Examples 1 to 6 (ABS 300).

SAN copolymer B2 - a grade of low flow index - was used in Examples 1a to 6a (ABS 100).

### SAN copolymer (B1)

Statistical copolymer (B1) from styrene and acrylonitrile with a ratio of polymerized styrene to acrylonitrile of 73:27 with a weight average molecular weight Mw of 110,000 g/mol and a melt flow index (MFI) at 220°C/10kg of 60 to 70 g/10 minutes, produced by free radical solution polymerization.

### SAN copolymer (B2)

Statistical copolymer (B2) from styrene and acrylonitrile with a ratio of polymerized styrene to acrylonitrile of 71:29 with a weight average molecular weight Mw of 125,000 g/mol and a melt flow index (MFI) at 220°C/10kg of 25 to 35 g/10 minutes, produced by free radical solution polymerization.

### Additives and/or processing aids C1 to C5

| | |
|---|---|
| C1 | Ethylene bis stearamid ('Palmowax' from PALMAMIDE SDN BHD) |
| C2 | Distearyl pentaeritritol diphosphite (SPEP from Addivant |
| C3 | Silicon oil 1000 cst from KK Chempro India Pvt Ltd |
| C4 | Magnesium stearate from Sunshine organics |
| C5 | Magnesium oxide from Kyowa Chemicals |

Graft rubber polymer (A), SAN-copolymer (B), and the afore-mentioned components (C) were mixed (formulation see Table 11, batch size 5 kg) for 4 to 5 minutes in a high speed mixer to obtain a uniform premix and then said premix was melt blended in a twin-screw extruder at a speed of 80 rpm and using an incremental temperature profile from 220° C to 250° C for the different barrel zones.

The extruded strands were cooled in a water bath, air-dried and pelletized.

**Table 11 ABS molding composition**

| Blend | ABS 300 | ABS 100 |
|---|---|---|
| Components | (wt.-%) | (wt.-%) |
| Graft copolymer A | 27.4 | 37 |
| SAN-copolymer B1 | 70.45 | - |
| SAN-copolymer B2 | - | 60.3 |
| C-1 | 1.47 | 1.95 |
| C-2 | 0.147 | 0.19 |
| C-3 | 0.147 | 0.15 |
| C-4 | 0.294 | 0.292 |
| C-5 | 0.098 | 0.098 |

Standard test specimens (ISO test bars) from each of the obtained blends - ABS 300 (a medium impact strength blend) and ABS 100 (a high impact strength blend) - were injection molded at a temperature of 230-260°C. The temperature profile of injection molding machine barrel is 230-260°C incremental.

Injection molding is done and test specimens are prepared for mechanical, thermal and optical testing. ISO test bars were injection molded. The test results are shown in Tables 12 to 15.

**Table 12**

| Properties | | | | | | | |
|---|---|---|---|---|---|---|---|
| | | ABS 300 | | | | | |
| | | Ex. 1 | Ex. 2 | Ex. 3 | Ex. 4 | Ex. 5 | Ex. 6 |
| Graft rubber copolymer A | | A1 | A2 | A3 | A4 | A5 | A6 |
| particle size d50 (nm) of agglomerated rubber | | 230 | 250 | 280 | 310 | 330 | 350 |
| BY FTIR | % AN | 23.7 | 24.2 | 24.2 | 24 | 24.6 | 23.5 |
| | % BD | 14.1 | 13.8 | 14.1 | 14 | 13.2 | 14.6 |
| | % ST | 62.2 | 62.0 | 61.7 | 62 | 62.2 | 61.9 |
| MFR g/10 min, 220°C, 10 kg load | | 35.5 | 40 | 40 | 39.5 | 44.5 | 33.5 |
| NIIS, 6.4mm, kg.cm/cm, at 23 °C, | | 19 | 18.5 | 19 | 22 | 18.5 | 20.5 |
| NIIS, 3.2mm, kg.cm/cm, at 23 °C | | 25 | 23 | 25 | 29 | 24.5 | 27.5 |
| Tensile, kg/cm², 50 mm/min | | 500 | 500 | 505 | 495 | 505 | 505 |
| Tensile Modulus, kg/cm2, 50 mm/min, | | 27650 | 27100 | 27050 | 26550 | 27600 | 26650 |
| Elongation at Break, %, 50 mm/min, | | 20 | 17 | 17 | 20 | 21 | 15 |
| Flexural Strength, kg/cm², 5 mm/min, | | 855 | 855 | 860 | 850 | 855 | 820 |
| Flexural Modulus, kg/cm², 5mm/min, | | 28300 | 28450 | 28400 | 28000 | 29150 | 26100 |
| Rockwell Hardness, R - Scale | | 108 | 105 | 105 | 104 | 106 | 105 |
| HDT, °C, 1.8 Mpa , annealed | | 98.5 | 97.5 | 97.5 | 96.5 | 97 | 96 |
| Vicat Softening Temperature, °C | | 100 | 100 | 100 | 100 | 99 | 98 |
| Yellowness Index | | 26.5 | 28.4 | 27.6 | 28.6 | 28.1 | 28.3 |

**Table 13**

| Properties | | | | | | | |
|---|---|---|---|---|---|---|---|
| | | ABS 100 | | | | | |
| | | Ex 1a | Ex 2a | Ex 3a | Ex 4a | Ex 5a | Ex 6a |
| Graft rubber copolymer A | | A1 | A2 | A3 | A4 | A5 | A6 |
| particle size d50 (nm) of agglomerated rubber | | 230 | 250 | 280 | 310 | 330 | 350 |
| BY FTIR | % AN | 23.5 | 22.6 | 23.1 | 22.7 | 22.9 | 22.6 |
| | % BD | 18.8 | 19.7 | 19.6 | 19.8 | 19.2 | 19.8 |
| | % ST | 57.7 | 57.7 | 57.4 | 57.4 | 57.9 | 57.6 |
| MFR, g/ 10 min, 220°C, 10 kg load | | 13.5 | 13 | 12.5 | 13.5 | 15 | 9 |
| NIIS, 6.4mm, kg.cm/cm, at 23 °C, | | 38 | 45 | 44 | 43 | 42 | 48.5 |
| NIIS, 3.2mm, kg.cm/cm, at 23 °C | | 38 | 50 | 44 | 39.5 | 48 | 60.5 |
| Tensile, kg/cm², 50 mm/min | | 480 | 455 | 470 | 465 | 470 | 460 |
| Tensile Modulus, kg/cm², 50 mm/min, | | 24900 | 23550 | 24100 | 24050 | 24000 | 23600 |
| Elongation at Break, %, 50 mm/min, | | 17 | 21 | 18 | 18 | 16 | 22 |
| Flexural Strength, kg/cm², 5 mm/min, | | 800 | 770 | 780 | 770 | 805 | 735 |
| Flexural Modulus, kg/cm², 5 mm/min, | | 24,750 | 24050 | 24550 | 24450 | 25250 | 22550 |
| Rockwell Hardness, R - Scale | | 100 | 95 | 96 | 96 | 96 | 100 |
| HDT, °C, 1.8 Mpa , annealed | | 98.5 | 98 | 98.5 | 97 | 99 | 97.5 |
| Vicat Softening Temperature , °C | | 98.5 | 100 | 98 | 100 | 98.5 | 99 |
| Yellowness Index | | 32.2 | 28.04 | 28.7 | 30.9 | 30.68 | 30.3 |

Tables 12 and 13 show that the butadiene rubber comprised in the ABS molding compositions (ABS 100 and ABS 300) according to examples 1 to 6 and 1a to 6a has a very high tolerance to the properties irrespective of its particle size d50.

Selected properties of reference grades are compared (see Tables 14 and 15) for non-inventive graft rubber copolymers A-C1 to A-C6 and graft rubber copolymers A1 to A6 obtained according to the process of the invention to understand the effect of the particle size on the properties.

It is evident from Tables 14 and 15 that ABS molding compositions comprising graft copolymers A which are prepared by use of a (starting) diene rubber latex obtained by a process according to the invention are more robust than such obtained by a process with only a single hold up step in the preparation of the diene rubber latex.

The properties of the ABS molding compositions remain stable even at very low particle sizes.

Apart from this the (starting) diene rubber latex obtained by a process according to the invention has an improved productivity (reduced polymerization time) compared to the prior art and has a higher particle size. The 2^{nd} hold up stage - in the preparation of the diene rubber latex - of the process according to the invention is assumed to increase the gel content of the (starting) diene rubber latex without affecting crosslinking of the latex.

The obtained (starting) diene rubber latex has a higher gel content with controlled crosslinking assessed by the swelling index in comparison to (starting) diene rubber latices according to the prior art.

**Table 14**

| Properties | | | | | | | | | | | | |
|---|---|---|---|---|---|---|---|---|---|---|---|---|
| ABS 300 | | | | | | | | | | | | |
| d50 (nm) agglomerated rubber | 230 nm | | 250 nm | | 280 nm | | 310 nm | | 330 nm | | 350 nm | |
| Graft rubber copolymer A | A-C1 | A1 | A-C2 | A2 | A-C3 | A3 | A-C4 | A4 | A-C5 | A5 | A-C6 | A6 |
| MFR, g/10 min, 220°C, 10 kg load | 38 | 35.5 | 41 | 40 | 39 | 40 | 34.5 | 39.5 | 34.5 | 44.5 | 35.5 | 33.5 |
| NIIS, 6.4mm, kg.cm/cm, at 23 °C, | 14 | 19 | 16 | 18.5 | 16 | 19 | 21.5 | 22 | 22.5 | 18.5 | 24 | 20.5 |
| NIIS, 3.2mm, kg.cm/cm, at 23 °C | 19.5 | 25 | 22 | 23 | 16.5 | 25 | 30 | 29 | 31 | 24.5 | 32.5 | 27.5 |
| Elongation at Break, %, 50 mm/min | 17 | 20 | 19 | 17 | 12 | 17 | 20 | 20 | 22 | 21 | 23 | 15 |
| Yellowness Index | 26.74 | 26.5 | 27.71 | 28.4 | 29.3 | 27.6 | 29.85 | 28.6 | 29.24 | 28.1 | 28.86 | 28.3 |

**Table 15**

| Properties | | | | | | | | | | | | |
|---|---|---|---|---|---|---|---|---|---|---|---|---|
| | ABS 100 | | | | | | | | | | | |
| d50 (nm) agglomerated rubber | 230 nm | | 250 nm | | 280 nm | | 310 nm | | 330 nm | | 350 nm | |
| Graft rubber copolymer A | A-C1 | A1 | A-C2 | A2 | A-C3 | A3 | A-C4 | A-4 | A-C5 | A5 | A-C6 | A6 |
| MFR, g/10 min, 220°C, 10 kg load | 12.5 | 13.5 | 13.5 | 13 | 13.5 | 12.5 | 13 | 13.5 | 13 | 15 | 13.5 | 9 |
| NIIS, 6.4mm, kg.cm/cm, at 23 °C, | 33 | 38 | 34 | 45 | 41 | 44 | 38.5 | 43 | 45.5 | 42 | 41 | 48.5 |
| NIIS, 3.2mm, kg.cm/cm, at 23 °C | 33.5 | 38 | 34.5 | 50 | 45.5 | 44 | 44 | 39.5 | 53.5 | 48 | 51.5 | 60.5 |
| Elongation at Break, %, 50 mm/min | 18 | 17 | 19 | 21 | 21 | 18 | 22 | 18 | 21 | 16 | 22 | 22 |
| Yellowness Index | 30 | 32.2 | 28.04 | 30.9 | 30.68 | 30.3 | 32.49 | 31.7 | 32.81 | 31.2 | 32.27 | 30.6 |

## Claims

1. Process for the preparation of a diene rubber latex (S-A1) by emulsion polymerization which process comprises steps (1) to (6):
(1) providing in a reactor an initial composition comprising at least one conjugated diene, preferably butadiene, at least one vinylaromatic monomer, preferably styrene, at least one chain transfer agent (CTA), at least one emulsifier, at least one initiator and water, wherein the amount of the conjugated diene is 22 to 32 wt.-% - based on the total weight of the conjugated diene used in the process, the amount of the vinylaromatic monomer is 22 to 32 wt.-% - based on the total weight of the vinyl aromatic monomer used in the process, and the amount of the chain transfer agent is 22 to 32 wt.-% - based on the total weight of the chain transfer agent used in the process;
(2) polymerization of the initial composition for 30 to 90 minutes, preferably 50 to 70 minutes;
(3) within 70 to 110 minutes continuous feeding to the composition obtained in step (2) of:
further 10 to 25 wt.-% conjugated diene - based on the total weight of the conjugated diene used in the process -,
further 15 to 30 wt.-% vinylaromatic monomer - based on the total weight of the vinylaromatic monomer used in the process -, and
further 20 to 35 wt.-% chain transfer agent - based on the total weight of the chain transfer agent used in the process -;
(4) further polymerization of the composition obtained in step (3) for 30 to 90 minutes, preferably 45 to 75 minutes;
(5) within 200 to 300 minutes, preferably 230 to 250 minutes, continuous feeding to the composition obtained in step (4) of: remaining conjugated diene, remaining vinylaromatic monomer (based on a total of 100 wt.-%, each), and of remaining chain transfer agent (based on a total of 100 wt.-%);
(6) further polymerization of the composition obtained in step (5) up to completion - preferably up to a conversion rate of 92 to 96% - of the polymerization -
where in all steps (1) to (6) the (reactor) temperature is kept at 60 to 75°C, preferably 65 to 70°C.

2. Process according to claim 1 wherein a diene rubber latex (S-A1) having a gel content (measured in accordance with ASTM D3616 - 95(2019)) of 70 to 90 wt.-%, preferably 75 to 90 wt.-%, - based on the water insoluble solids of said latex - is obtained.

3. Process according to claim 1 or 2 wherein a diene rubber latex (S-A1) having a median weight particle diameter D₅₀ of 90 to 120 nm (determined by light scattering) is obtained.

4. Process according to any of claims 1 to 3 wherein a diene rubber latex (S-A1) having a swelling index of more than 25% (measured in accordance with ASTM D 3616 - 95(2019)) is obtained.

5. Process according to any of claims 1 to 4 wherein 70 to 99 wt.-%, preferably 85 to 99 wt.-%, more preferably 85 to 95 wt.-%, of at least one, preferably one, conjugated diene, preferably butadiene, and 1 to 30 wt.-%, preferably 1 to 15 wt.-%, more preferably 5 to 15 wt.-%, of at least one, preferably one, vinylaromatic monomer, preferably styrene, is used, based on the total amount of monomers used for the production of the diene rubber latex (S-A1).

6. Process according to any of claims 1 to 5 where in step (1) the amount of the conjugated diene, in particular butadiene, is 26 to 30 wt.-%, the amount of the vinylaromatic monomer, in particular styrene, is 26 to 30 wt.-%, and the amount of the chain transfer agent is 26 to 30 wt.-%.

7. Process according to any of claims 1 to 6 where in step (3) to the composition obtained in step (2) further 12 to 20 wt.-% conjugated diene, in particular butadiene, further 20 to 27 wt.-% vinylaromatic monomer, in particular styrene, and further 25 to 30 wt.-% chain transfer agent are continuously fed.

8. Process according to any of claims 1 to 7 where the polymer composition obtained in step (6) has a conversion rate of the monomers of 92 to 96%, based on the sum of monomers used in the process.

9. Diene rubber latex (S-A1) obtained by a process according to any of claims 1 to 8.

10. Use of a diene rubber latex (S-A1) according to claim 9 as seed latex for the preparation of graft rubber copolymers (A).

11. Graft rubber copolymer (A) - consisting of a graft sheath (A2) and a graft substrate (an agglomerated diene rubber latex) (A1) - obtained by a process comprising the steps: α) providing a diene rubber latex (S-A1) according to claim 9; β) agglomeration of latex (S-A1) with at least one acid anhydride to obtain an agglomerated diene rubber latex (A1) with a median weight particle diameter D₅₀ of 200 to 400 nm; and γ) grafting of the agglomerated diene rubber latex (A1) by emulsion polymerization of styrene and acrylonitrile in a weight ratio of 95:5 to 50:50 (= graft sheath (A2)) to form a graft rubber copolymer (A).

12. Thermoplastic molding composition comprising at least one graft rubber copolymer (A) according to claim 11 and at least one rubber-free thermoplastic (co)polymer (B).

13. Thermoplastic molding composition according to claim 12 wherein the rubber-free thermoplastic (co)polymer (B) is a copolymer of styrene and acrylonitrile in a weight ratio of from 80:20 to 60:40, it being possible for styrene and/or acrylonitrile to be replaced wholly or partially by alpha-methylstyrene, methyl methacrylate, maleic anhydride or N-phenylmaleimide.

14. Thermoplastic molding composition according to claim 12 or 13 comprising:
(A) 5 to 50 wt.-%, preferably 20 to 45 wt.-% of at least one graft rubber copolymer (A);
(B) 50 to 95 wt.-%, preferably 55 to 80 wt.-%, of at least one rubber-free thermoplastic (co)polymer (B), in particular a copolymer of styrene and acrylonitrile;
(C) 0 to 5 wt.-%, preferably 0.01 to 3 wt.-%, of at least one additive and/or processing aid (C); where (A), (B) and, if present (C), sum up to 100 wt.-%.

15. Use of the graft rubber copolymers according to claims 11 or of the thermoplastic molding compositions according to claims 12 to 14 for the production of molded articles, in particular in the automobile and household industry.

## Patentansprüche

1. Verfahren zur Herstellung eines Dienkautschuklatex (S-A1) durch Emulsionspolymerisation, wobei das Verfahren die Schritte (1) bis (6) umfasst:
(1) Bereitstellen einer Ausgangszusammensetzung in einem Reaktor, die mindestens ein konjugiertes Dien, vorzugsweise Butadien, mindestens ein vinylaromatisches Monomer, vorzugsweise Styrol, mindestens ein Kettenübertragungsmittel (CTA), mindestens einen Emulgator, mindestens einen Initiator und Wasser umfasst, wobei die Menge des konjugierten Diens 22 bis 32 Gew.-% - bezogen auf das Gesamtgewicht des im Verfahren verwendeten konjugierten Diens - beträgt, die Menge des vinylaromatischen Monomers 22 bis 32 Gew.-% - bezogen auf das Gesamtgewicht des im Verfahren verwendeten vinylaromatischen Monomers - beträgt und die Menge des Kettenübertragungsmittels 22 bis 32 Gew.-% - bezogen auf das Gesamtgewicht des im Verfahren verwendeten Kettenübertragungsmittels - beträgt;
(2) Polymerisation der Ausgangszusammensetzung für 30 bis 90 Minuten, vorzugsweise 50 bis 70 Minuten;
(3) innerhalb von 70 bis 110 Minuten kontinuierliches Zuführen zu der in Schritt (2) erhaltenen Zusammensetzung von:
weiteren 10 bis 25 Gew.-% konjugiertem Dien - bezogen auf das Gesamtgewicht des in dem Verfahren verwendeten konjugierten Diens -,
weiteren 15 bis 30 Gew.-% vinylaromatischen Monomer - bezogen auf das Gesamtgewicht des in dem Verfahren verwendeten vinylaromatischen Monomers - und
weiteren 20 bis 35 Gew.-% Kettenübertragungsmittel - bezogen auf das Gesamtgewicht des im Verfahren verwendeten Kettenübertragungsmittels -;
(4) weitere Polymerisation der in Schritt (3) erhaltenen Zusammensetzung für 30 bis 90 Minuten, vorzugsweise 45 bis 75 Minuten;
(5) innerhalb von 200 bis 300 Minuten, vorzugsweise 230 bis 250 Minuten, kontinuierliches Zuführen zu der in Schritt (4) erhaltenen Zusammensetzung von: restlichem konjugiertem Dien, restlichem vinylaromatischem Monomer (jeweils bezogen auf insgesamt 100 Gew.-%) und restlichem Kettenübertragungsmittel (bezogen auf insgesamt 100 Gew.-%);
(6) weitere Polymerisation der in Schritt (5) erhaltenen Zusammensetzung bis zum Abschluss der Polymerisation - vorzugsweise bis zu eine Umsetzungsgrad von 92 bis 96 % -
wobei in allen Schritten (1) bis (6) die (Reaktor-)Temperatur bei 60 bis 75°C, vorzugsweise 65 bis 70°C, gehalten wird.

2. Verfahren nach Anspruch 1, wobei ein Dienkautschuklatex (S-A1) mit einem Gelgehalt (gemessen nach ASTM D3616-95(2019)) von 70 bis 90 Gew.-%, vorzugsweise 75 bis 90 Gew.-%, - bezogen auf die wasserunlöslichen Feststoffe des Latex - erhalten wird.

3. Verfahren nach Anspruch 1 oder 2, wobei ein Dienkautschuklatex (S-A1) mit einem mittleren Gewichtsteilchendurchmesser D₅₀ von 90 bis 120 nm (bestimmt durch Lichtstreuung) erhalten wird.

4. Verfahren nach einem der Ansprüche 1 bis 3, wobei ein Dienkautschuklatex (S-A1) mit einem Quellungsindex von mehr als 25 % (gemessen nach ASTM D 3616 - 95(2019)) erhalten wird.

5. Verfahren nach einem der Ansprüche 1 bis 4, wobei 70 bis 99 Gew.-%, vorzugsweise 85 bis 99 Gew.-%, besonders bevorzugt 85 bis 95 Gew.-%, mindestens eines, vorzugsweise eines, konjugierten Diens, vorzugsweise Butadien, und 1 bis 30 Gew.-%, vorzugsweise 1 bis 15 Gew.-%, besonders bevorzugt 5 bis 15 Gew.-%, mindestens eines, vorzugsweise eines, vinylaromatischen Monomers, vorzugsweise Styrol, eingesetzt werden, bezogen auf die Gesamtmenge der für die Herstellung des Dienkautschuklatex (S-A1) verwendeten Monomere.

6. Verfahren nach einem der Ansprüche 1 bis 5, wobei in Schritt (1) die Menge des konjugierten Diens, insbesondere Butadien, 26 bis 30 Gew.-% beträgt, die Menge des vinylaromatischen Monomers, insbesondere Styrol, 26 bis 30 Gew.-% beträgt und die Menge des Kettenübertragungsmittels 26 bis 30 Gew.-% beträgt.

7. Verfahren nach einem der Ansprüche 1 bis 6, wobei in Schritt (3) der in Schritt (2) erhaltenen Zusammensetzung weitere 12 bis 20 Gew.-% konjugiertes Dien, insbesondere Butadien, weitere 20 bis 27 Gew.-% vinylaromatisches Monomer, insbesondere Styrol, und weitere 25 bis 30 Gew.-% Kettenübertragungsmittel kontinuierlich zugeführt werden.

8. Verfahren nach einem der Ansprüche 1 bis 7, wobei die in Schritt (6) erhaltene Polymerzusammensetzung einen Umsetzungsgrad der Monomere von 92 bis 96 %, bezogen auf die Summe der im Prozess verwendeten Monomere, hat.

9. Dienkautschuklatex (S-A1), erhalten durch ein Verfahren nach einem der Ansprüche 1 bis 8.

10. Verwendung eines Dienkautschuklatex (S-A1) nach Anspruch 9 als Saatlatex für die Herstellung von Pfropfkautschukcopolymeren (A).

11. Pfropfkautschukcopolymer (A) - bestehend aus einer Pfropfhülle (A2) und einem Pfropfsubstrat (einem agglomerierten Dienkautschuklatex) (A1) - erhalten durch ein Verfahren, das die folgenden Schritte umfasst: α) Bereitstellen eines Dienkautschuklatex (S-A1) nach Anspruch 9; β) Agglomeration des Latex (S-A1) mit mindestens einem Säureanhydrid, um einen agglomerierten Dienkautschuklatex (A1) mit einem mittleren Gewichtsteilchendurchmesser Dso von 200 bis 400 nm zu erhalten; und γ) Pfropfen des agglomerierten Dienkautschuklatex (A1) durch Emulsionspolymerisation von Styrol und Acrylnitril in einem Gewichtsverhältnis von 95:5 bis 50:50 (= Pfropfhülle (A2)), um ein Pfropfkautschukcopolymer (A) zu bilden.

12. Thermoplastische Formmasse, enthaltend mindestens ein Pfropfkautschukcopolymer (A) nach Anspruch 11 und mindestens ein kautschukfreies thermoplastisches (Co-)Polymer (B).

13. Thermoplastische Formmasse nach Anspruch 12, wobei das kautschukfreie thermoplastische (Co-)Polymer (B) ein Copolymer aus Styrol und Acrylnitril im Gewichtsverhältnis von 80:20 bis 60:40 ist, wobei Styrol und/oder Acrylnitril ganz oder teilweise durch alpha-Methylstyrol, Methylmethacrylat, Maleinsäureanhydrid oder N-Phenylmaleinimid ersetzt sein kann.

14. Thermoplastische Formmasse nach Anspruch 12 oder 13, umfassend:
(A) 5 bis 50 Gew.-%, vorzugsweise 20 bis 45 Gew.-%, mindestens eines Pfropfkautschukcopolymers (A);
(B) 50 bis 95 Gew.-%, vorzugsweise 55 bis 80 Gew.-%, mindestens eines kautschukfreien thermoplastischen (Co-)Polymers (B), insbesondere eines Copolymers aus Styrol und Acrylnitril;
(C) 0 bis 5 Gew.-%, vorzugsweise 0,01 bis 3 Gew.-%, mindestens eines Zusatzstoffes und/oder Verarbeitungshilfsmittels (C); wobei (A), (B) und, falls vorhanden, (C) in der Summe bis zu 100 Gew.-% betragen.

15. Verwendung der Pfropfkautschukcopolymere nach Anspruch 11 oder der thermoplastischen Formmassen nach den Ansprüchen 12 bis 14 zur Herstellung von Formteilen, insbesondere in der Automobil- und Haushaltsindustrie.

## Revendications

1. Procédé pour la préparation d'un latex de caoutchouc diénique (S-A1) par polymérisation en émulsion, lequel procédé comprend les étapes (1) à (6) :
(1) la fourniture dans un réacteur d'une composition initiale comprenant au moins un diène conjugué, de préférence du butadiène, au moins un monomère vinylique aromatique, de préférence du styrène, au moins un agent de transfert de chaîne (CTA), au moins un émulsifiant, au moins un initiateur et de l'eau, la quantité du diène conjugué étant de 22 à 32 % en poids, sur la base du poids total du diène conjugué utilisé dans le procédé, la quantité du monomère vinylique aromatique étant de 22 à 32 % en poids, sur la base du poids total du monomère vinylique aromatique utilisé dans le procédé, et la quantité de l'agent de transfert de chaîne étant de 22 à 32 % en poids, sur la base du poids total de l'agent de transfert de chaîne utilisé dans le procédé ;
(2) la polymérisation de la composition initiale pendant 30 à 90 minutes, de préférence 50 à 70 minutes ;
(3) sur une durée de 70 à 110 minutes l'introduction en continu dans la composition obtenue à l'étape (2) de :
10 à 25 % en poids de diène conjugué supplémentaire, sur la base du poids total du diène conjugué utilisé dans le procédé,
15 à 30 % en poids de monomère vinylique aromatique supplémentaire, sur la base du poids total du monomère vinylique aromatique utilisé dans le procédé, et
20 à 35 % en poids d'agent de transfert de chaîne supplémentaire, sur la base du poids total de l'agent de transfert de chaîne utilisé dans le procédé ;
(4) la polymérisation supplémentaire de la composition obtenue à l'étape (3) pendant 30 à 90 minutes, de préférence 45 à 75 minutes ;
(5) sur une durée de 200 à 300 minutes, de préférence de 230 à 250 minutes, l'introduction en continu dans la composition obtenue à l'étape (4) de : diène conjugué restant, monomère vinylique aromatique restant (sur la base d'un total de 100 % en poids, chacun) et d'agent de transfert de chaîne restant (sur la base d'un total de 100 % en poids) ;
(6) la polymérisation supplémentaire de la composition obtenue à l'étape (5) jusqu'à l'achèvement, de préférence jusqu'à un taux de conversion de 92 à 96 %, de la polymérisation,
où la température (du réacteur) dans toutes les étapes (1) à (6) est maintenue à 60 à 75 °C, de préférence à 65 à 70 °C.

2. Procédé selon la revendication 1 dans lequel un latex de caoutchouc diénique (S-A1) ayant une teneur en gel (mesurée conformément à la norme ASTM D3616-95(2019)) de 70 à 90 % en poids, de préférence de 75 à 90 % en poids, sur la base des matières solides insolubles dans l'eau dudit latex, est obtenu.

3. Procédé selon la revendication 1 ou 2 dans lequel un latex de caoutchouc diénique (S-A1) ayant un diamètre médian des particules en poids D₅₀ (déterminé par diffusion de la lumière) de 90 à 120 nm est obtenu.

4. Procédé selon l'une quelconque des revendications 1 à 3 dans lequel un latex de caoutchouc diénique (S-A1) ayant un indice de gonflement (mesuré conformément à la norme ASTM D3616-95(2019)) de plus de 25 % est obtenu.

5. Procédé selon l'une quelconque des revendications 1 à 4 dans lequel 70 à 99 % en poids, de préférence 85 à 99 % en poids, de préférence encore 85 à 95 % en poids d'au moins un, de préférence d'un seul, diène conjugué, de préférence de butadiène, et 1 à 30 % en poids, de préférence 1 à 15 % en poids, de préférence encore 5 à 15 % en poids d'au moins un, de préférence d'un seul, monomère vinylique aromatique, de préférence de styrène, sont utilisés, sur la base de la quantité totale de monomères utilisés pour la production du latex de caoutchouc diénique (S-A1).

6. Procédé selon l'une quelconque des revendications 1 à 5 où à l'étape (1) la quantité du diène conjugué, en particulier du butadiène, est de 26 à 30 % en poids, la quantité du monomère vinylique aromatique, en particulier du styrène, est de 26 à 30 % en poids et la quantité de l'agent de transfert de chaîne est de 26 à 30 % en poids.

7. Procédé selon l'une quelconque des revendications 1 à 6 où à l'étape (3) 12 à 20 % en poids de diène conjugué, en particulier de butadiène, supplémentaire, 20 à 27 % en poids de monomère vinylique aromatique, en particulier de styrène, supplémentaire et 25 à 30 % en poids d'agent de transfert de chaîne supplémentaire sont introduits en continu dans la composition obtenue à l'étape (2).

8. Procédé selon l'une quelconque des revendications 1 à 7 où la composition de polymère obtenue à l'étape (6) a un taux de conversion des monomères de 92 à 96 %, sur la base de la somme des monomères utilisés dans le procédé.

9. Latex de caoutchouc diénique (S-A1) obtenu par un procédé selon l'une quelconque des revendications 1 à 8.

10. Utilisation d'un latex de caoutchouc diénique (SA1) selon la revendication 9 comme latex de départ pour la préparation de copolymères de caoutchouc greffés (A).

11. Copolymère de caoutchouc greffé (A), constitué d'une enveloppe de greffage (A2) et d'un substrat de greffage (un latex de caoutchouc diénique aggloméré) (A1), obtenu par un procédé comprenant les étapes : α) la fourniture d'un latex de caoutchouc diénique (S-A1) selon la revendication 9 ; β) l'agglomération de latex (S-A1) avec au moins un anhydride d'acide pour obtenir un latex de caoutchouc diénique (A1) aggloméré présentant un diamètre médian des particules en poids D₅₀ de 200 à 400 nm ; et γ) le greffage du latex de caoutchouc diénique (A1) aggloméré par polymérisation en émulsion de styrène et d'acrylonitrile en un rapport pondéral de 95:5 à 50:50 (= enveloppe de greffage (A2)) pour former un copolymère de caoutchouc greffé (A).

12. Composition thermoplastique à mouler comprenant au moins un copolymère de caoutchouc greffé (A) selon la revendication 11 et au moins un (co)polymère thermoplastique sans caoutchouc (B).

13. Composition thermoplastique à mouler selon la revendication 12 dans laquelle le (co)polymère thermoplastique sans caoutchouc (B) est un copolymère de styrène et d'acrylonitrile en un rapport pondéral allant de 80:20 à 60:40, le styrène et/ou l'acrylonitrile pouvant être remplacés en totalité ou en partie par de l'alpha-méthylstyrène, du méthacrylate de méthyle, de l'anhydride maléique ou du N-phénylmaléimide.

14. Composition thermoplastique à mouler selon la revendication 12 ou 13 comprenant :
(A) 5 à 50 % en poids, de préférence 20 à 45 % en poids d'au moins un copolymère de caoutchouc greffé (A) ;
(B) 50 à 95 % en poids, de préférence 55 à 80 % en poids, d'au moins un (co)polymère thermoplastique sans caoutchouc (B), en particulier d'un copolymère de styrène et d'acrylonitrile ;
(C) 0 à 5 % en poids, de préférence 0,01 à 3 % en poids, d'au moins un additif et/ou adjuvant de fabrication (C) ;
où (A), (B) et, le cas échéant, (C) totalisent 100 % en poids.

15. Utilisation des copolymères de caoutchouc greffés selon la revendication 11 ou de la composition thermoplastique à mouler selon les revendications 12 à 14 pour la production d'articles moulés, en particulier dans l'industrie de l'automobile ou des articles ménagers.
